# EUROPEAN PATENT SPECIFICATION

(11) **EP 1 236 328 B1**
(45) Date of publication and mention of the grant of the patent: **15.11.2006**
(21) Application number: 00982007.7
(22) Date of filing: 23.11.2000
(51) Int. Cl.: H04L 29/02, G06F 17/30

(54) **PROCEDURE AND SYSTEM FOR DETERMINING THE ACCESSIBILITY OF A DATA FILE IN A DISTRIBUTED SYSTEM**
VERFAHREN UND SYSTEM ZUR BESTIMMUNG DER ZUGÄNGLICHKEIT EINER DATEI IN EINEM VERTEILTEN SYSTEM
PROCEDURE ET SYSTEME DESTINES A DETERMINER L'ACCESSIBILITE D'UN FICHIER DE DONNEES DANS UN SYSTEME REPARTI

(30) Priority: 24.11.1999 SE 9904251
(43) Date of publication of application: 04.09.2002
(73) Proprietor: TELIA AB, 123 86 Farsta (SE)
(72) Inventor: BERGSTEN, Anders, S-977 52 Lulea (SE); BORG, Niklas, S-120 58 Arsta (SE); JOHANSSON, Joachim, S-977 52 Lulea (SE)
(74) Representative: Akerman, Marten Lennart
(86) International application number: PCT/SE2000/002310
(87) International publication number: WO 2001/039462

(56) References cited:
- EP-A1- 0 866 626
- EP-A2- 0 903 901
- SE-C2- 507 720

## Description

### Field of the invention

The present invention relates in general to data file transmission in data communication networks and more exact to a procedure and a corresponding system at data file transmission in a data communication network for determining the accessibility of examples of a specific data file in storing units.

### Technical background

At storing of data files in storing units in data communication networks, examples of a specific data file can be stored in a plurality of different storing units. This is made, for instance, with data files which are stored for later transmission over Internet via ftp (File Transfer Protocol), or via http (HyperText Transfer Protocol) from ftp-servers respective web-servers. The procedure is called mirroring and can include anything from that examples of a specific data file is stored in a plurality of storing units, to that an identical set of data files is stored in a plurality of storing units. By storing examples of the data file in a plurality of storing units, load sharing can be allowed at transmission of a data file from one storing unit to another unit, by which overload of storing units is easier avoided.

One problem that occurs when examples of a specific data file are stored in a plurality of storing units in the data communications network is that it is difficult for the user to locate the storing units in which examples of the specific data file are stored, and which of these storing units that from load and bandwidth etc point of view are suitable to be utilized at transmission of data files.

Location of the storing units in which examples of a specific data file are stored is made according to known technology, for instance by providing lists over these storing units. This can, for instance, be made on a web page which the one who provides the data file is providing. If the transmission shall be made from a storing unit by means of an application which is different from the one which is used at the presentation of the lists, also the addresses to the storing units must be noted and entered manually. This is a circumstantial method, especially if it turns out that several of the storing units are heavily loaded, and repeated attempts with different storing units must be made.

Beside the solution above, there is in the case ftp-transmission also the database archie which holds extensive information about in which ftp-servers examples of specific data files are stored. This database requires a specific archie-client and also requires a two-step procedure, where first, by means of more or less complicated searches, the ftp-servers where examples of the specific data file are stored, are located, to after that connect to one of the located ftp-servers. Neither this method offers any information about which ftp-servers that are heavily loaded. Because the database in most cases is updated by another participant than the one who provides the data file, it is, in addition, not always correctly updated and therefore can return addresses to ftp-servers in which the data file no longer is stored, or in which a wrong version of the data file is stored.

SE 507720 C2 discloses an arrangement for load sharing in computer networks and, more exactly, an arrangement for distribution of traffic, for instance via Internet, from clients to service suppliers who provide services from many servers. The solution proposed therein makes possible distribution to one of a number of replicated servers. Suitable server is selected for instance on basis of available resources at the interface of the server, or less delay in the transmission. According to the disclosure, a number of replicated servers belong to an anycast-group and each anycast-group is connected to a domain name server which has the ability to select one of the replicated servers, so that a router can establish a connection between the selected server and the service-requesting client computer. Each replicated server can transmit a resource advertisement which contains information about available resources at the server in question, and about the link parameters of the server.

### Summary of the invention

One aim of the present invention consequently is to effect a procedure and a corresponding system at data file transmission in a data communication network for determining the accessibility of examples of a specific data file in storing units, which procedure and which device facilitates the location of the storing units in which the specific data file is stored.

Another aim of the present invention is to effect a procedure and a corresponding system at data file transmission in a data communication network for determining the accessibility of examples of a specific data file in storing units, which procedure and which device facilitates the identification of the storing units which, from a load and bandwidth etc point of view, are suitable to be utilised at transmission of the specific data file.

The above described and other aims are achieved according to the present invention by a procedure and a corresponding system of the in the introduction presented kind being given the characteristics which are defined in the independent patent claims. Preferred embodiments are defined by the dependent patent claims.

According to a first aspect of the invention, a procedure of the in the introduction presented kind is achieved, including the steps to from a user unit transmit an enquiry regarding the accessibility of examples of the specific data file to a group address, that each of the storing units in a group of the storing units listens to said group address, and that from each of the storing units in said group of the storing units, depending on in advance determined conditions, transmit a reply message regarding the accessibility of examples of the specific data file to the user unit.

According to a second aspect of the invention, a system of the in the introduction described kind is achieved, at which a user unit and the storing units are connected to said data communication network, including in the user unit arranged enquiry devices for transmission from a user unit an enquiry regarding the accessibility of examples of the specific data file to a group address, in each of the storing units in a group of the storing units arranged receiving devices for reception of a enquiry to said group address, and in each of the storing units in said group of the storing units arranged transmission devices for transmission from each of the storing units in said group of the storing units, depending on in advance determined conditions, a reply message regarding the accessibility of examples of the specific data file to the user unit. According to the invention, enquiry to a group of the storing units is consequently transmitted via a group address instead of an enquiry being transmitted to a separate unit, such as archie, or that a list is provided via a separate unit, such as a web page. Consequently one step in the location of examples of a data file can be eliminated. This results in reduced time for the location of examples of the data file. Because the enquiry is transmitted directly to the group of the storing units, also a direct response is allowed from each of said group of the storing units about the accessibility of the specific data file.

By the group of the storing units listening to common group address, the storing units which are enquired about the accessibility of examples of the specific data file can be limited. Storing units then in a simple way can be added to, or subtracted from, this limited group. In this way the storing units can be grouped by means of group addresses on basis of the data files which are stored in them. It is also realised that one and the same storing unit can listen to a plurality of different group addresses. One advantage of enquiry via a common group address is that examples of a data file easily can be located in a plurality of storing units at the same time. This makes possible a simpler handling of load sharing between the storing units which are storing the specific file. A provider of storing units or of a specific data file can also add or subtract the storing units that are enquired about by adding or subtracting storing units that listen to the common address. This will reduce the risk of transmission of a faulty data file when the data files that are stored on different storing units are changed.

In one embodiment of a procedure according to the invention, the group address is attached to a specific data file, i.e. all or a number of the storing units in which examples of a specific data file are stored, listen to a common group address. This is suitable when examples of a data file which is frequently asked for are stored in a plurality of different storing units. Alternatively, in another embodiment of a procedure according to the invention, the group address is attached to the group of the said storing units. This is suitable when, for instance, a number of storing units store an identical set of data files. In both these embodiments new storing units easily can be connected to the group address if examples of the data file is stored in a new storing unit, respective if a new storing unit is set up, in which an identical set of data files is stored. For instance can a new version of a data file be given a new group address, by which location of an old version can be avoided when the new version is asked for.

According to a another embodiment of a procedure according to the invention, the reply message is transmitted only if examples of the specific data file is stored in the storing unit and the storing unit is not overloaded.

One advantage of this embodiment is that the number of reply messages, which have to be transmitted in the data communication network and processed in the storing units and the user unit, is reduced. At the same time reply messages from the storing units which are of interest are received, namely those in which the data file is stored and which also has possibility to offer a possible transmission of the data file to the user unit. This embodiment further facilitates improvement of handling of load sharing by transmission from storing units which already are heavily loaded is being avoided.

### Brief description of the drawings

The invention will be described in detail in the following, with reference to enclosed schematic drawings which, for the purpose of exemplifying, show preferred embodiments of the invention.

Figure 1 shows schematically a system in which the present invention can be applied with advantage.

Figure 2A shows the message state in a system at the execution of a part of an embodiment of a procedure according to the present invention.

Figure 2B shows the message state in a system at the execution of a part of an embodiment of a procedure according to the present invention.

### Description of preferred embodiments

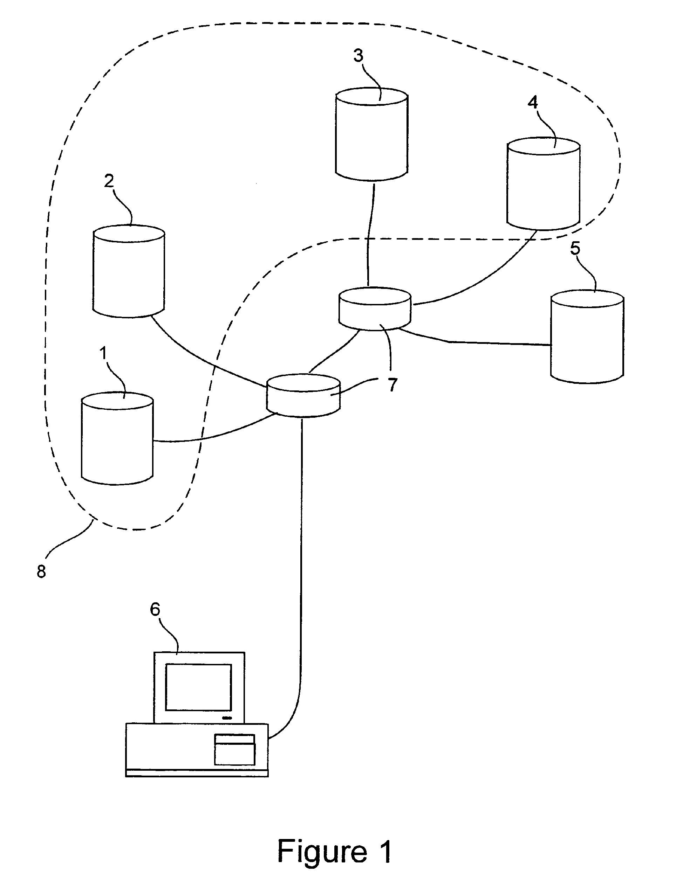

Figure 1 shows schematically a system in which the present invention can be applied with advantage. A number of ftp-servers 1-5 and a user unit 6, which includes an ftp-client, are connected to a data communication network 7. In a group 8 of the ftp-servers the same set of data files are stored, so called mirroring. The number of nodes in the data communication network is in Figure 1 only two. This shall not be regarded as a limitation of the invention to be suited for small a data communication networks, but is only intended to simplify the description. For the same reason the number of ftp-servers is limited to the five which are shown in Figure 1.

A user wants to locate examples of a data file in the ftp-servers 1-5, for instance for later transmission of the data file to the user unit 6. The user also wants to avoid that such a transmission of the data file then shall start from an ftp-server which is overloaded, or which cannot offer a satisfactory bandwidth for the transmission.

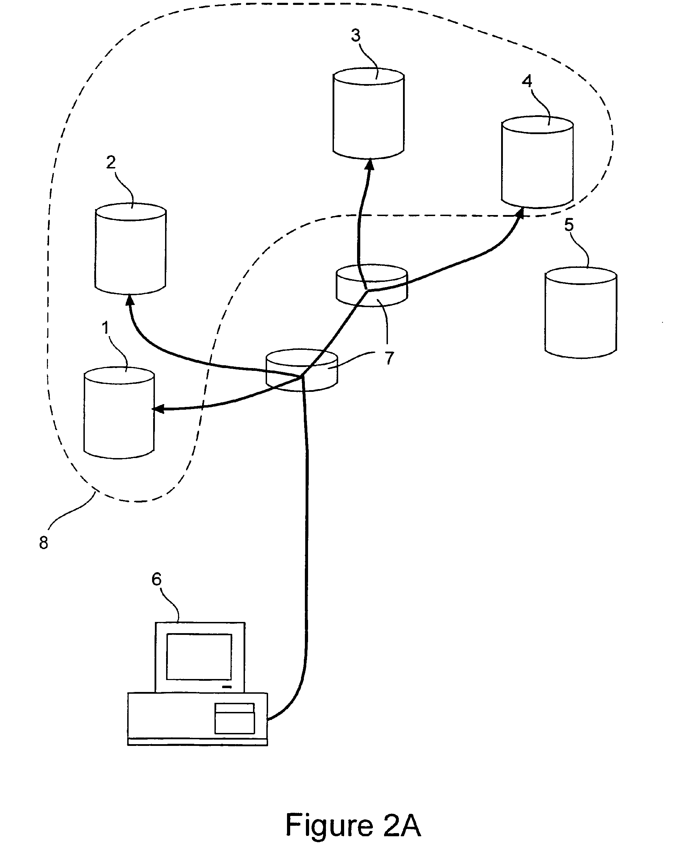

For location of examples of the data file in the ftp-servers 1-5 is, according to figure 2A, an enquiry 9 transmitted to the group 8 of the ftp-servers. This enquiry 9 is transmitted via the nodes in the data communication network to a group address to which the group 8 of the ftp-servers are listening. The group address is in this case attached to the group 8 of the ftp-servers, but can also be attached to the data file in the case it is not a matter of mirroring of whole ftp-servers but only of single data files. As can be seen in Figure 2A, the ftp-server 5 will not receive enquiry 9. This is due to the fact that it is not part of the group 8 of ftp-servers which are listening to the group address.

When enquiry 9 then has reached respective ftp-server in the group 8 of ftp-servers, respective ftp-server checks whether the data file asked for is stored in the ftp-server. After that, the ftp-server checks its load and estimates which bandwidth that can be offered at a possible transmission of the data file. If the data file is stored in ftp-server, and the ftp-server is not overloaded, the ftp-server makes a connection to the ftp-client of the user unit via a specific port to which the ftp-client of the user unit is listening. The port can be a standard port, determined on basis of information enclosed in the enquiry, or the same port as the transmitter port in the enquiry. In this example the conditions above are fulfilled for the ftp-servers 1-3.

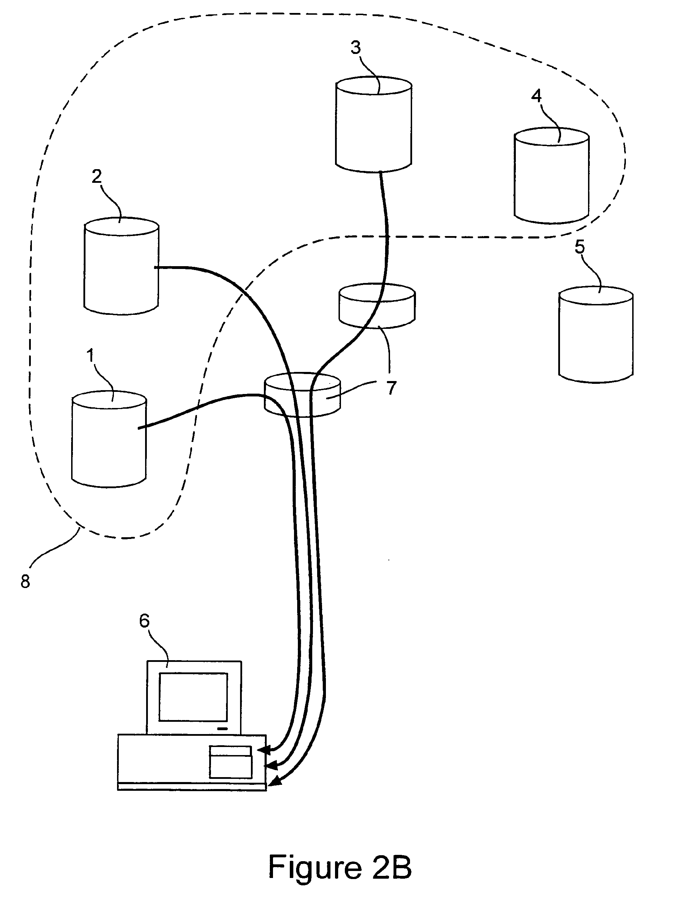

According to figure 2B, the ftp-servers 1-3 in which the data file is stored and which are not overloaded, then each transmits a reply message 10-12 to the user unit. A reply message from an ftp-server can include the search path of the data file, an estimation of the bandwidth that the ftp-server can offer, and information about the load of the ftp-server. In this case the ftp-server 4 does not transmit any reply message. This is due to the fact that said conditions are not fulfilled for the ftp-server 4, it can for instance be overloaded. Other conditions than those used in this example can be imagined, such as that only one enquiry has been received.

When the reply messages arrives at the user unit 6, this knows in which storing units examples of the data file asked for are, and can, on basis of the information which is in the reply message, for instance determine from which storing unit a transmission of the data file shall be made.

It is realized that a lot of modifications of the above described embodiments of the invention are possible within the frame of the invention, such as defined by the following patent claims. Fdr instance is the invention not limited to use at data file transmission, but can be used for location generally, and even if specific protocols have been described, the invention can be applied at other types of protocol.

## Claims

1. Procedure for data file transmission in a data communication network for determining the accessibility of examples of a specific data file in storing units (1-5), including the steps of
transmitting from a user unit (6) an enquiry regarding the accessibility of examples of the specific data file to a group address,
**characterised by** the steps of
each of the storing units (1-4) in a group (8) of the storing units listening to said group address, and
transmitting from each of the storing units in said group of the storing units, depending on in advance determined conditions, a reply message regarding the accessibility of examples of the specific data file to the user unit.

2. Procedure as claimed in claim 1, in which the group address is attached to the specific data file.

3. Procedure as claimed in claim 1, in which the group address is attached to said group of the storing units.

4. Procedure as claimed in any of the claims 1-3 in which the data communication network is an IP-network and the group address is a multicast address in the IP network.

5. Procedure as claimed in any of the claims 1-4, in which said in advance
determined conditions include at least one of:
that examples of the specific data file are stored in the storing unit, and that the storing unit is not overloaded.

6. Procedure as claimed in any of the claims 1-5, in which the reply message is transmitted via one in advance determined port.

7. Procedure as claimed in any of the claims 1-5, in which the reply message is transmitted via one, on basis of information that is transmitted with the enquiry, determined port.

8. Procedure as claimed in any of the claims 1-5, in which the reply message is transmitted via the same port as from which the enquiry was received.

9. Procedure as claimed in any of the claims 1- 8, in which the reply message includes the search path of the data file.

10. Procedure as claimed in any of the claims 1-9, in which the reply message includes an estimation of the bandwidth the storing unit can offer.

11. Procedure as claimed in any of the claims 1-10, in which the reply message includes information about the load of the storing unit.

12. System for data file transmission in a data communication network for determining the accessibility of examples of a specific data file in storing units (1-5), in which a user unit (6) and the storing units are connected to said data communication network, including
enquiry devices arranged in the user unit for transmission from the user unit of an enquiry regarding the accessibility of examples of the specific data file to a group address,
**characterised by**
reception devices arranged in each of the storing units (1-4) in a group (8) of the storing units for reception of an enquiry to said group address, and
transmission devices arranged in each of the storing units in said group of the storing units for transmission from each of the storing units in said group of the storing units, depending on in advance determined conditions, of a reply message regarding the accessibility of examples of the specific data file to the user unit.

13. System as claimed in claim 12, in which the group address is attached to the specific data file.

14. System as claimed in patent 12, in which the group address is attached to said group of the storing units.

15. System as claimed in any of the claims 12-14, in which the data communication network is an IP- network and the group address is a multicast address in the IP-network.

16. System as claimed in any of the claims 12-15, in which said in advance determined conditions include at least one of:
that examples of the specific data file are stored in the storing unit, and
that the storing unit is not overloaded.

17. System as claimed in any of the claims 12-16, in which each of said group of the storing units includes an ftp-server and the user unit includes an ftp-client.

18. System as claimed in any of the claims 12-17, in which each of said group of the storing units includes a web-server and the user unit includes a web-client.

## Patentansprüche

1. Verfahren zur Dateiübertragung in einem Datenkommunikationsnetzwerk zur Bestimmung der Zugänglichkeit von Beispielen für eine spezifische Datei in Speichereinheiten (1-5), das die Schritte umfasst:
Übertragen von einer Nutzereinheit (6) einer Anfrage betreffend die Zugänglichkeit von Beispielen für die spezifische Datei an eine Gruppenadresse, **gekennzeichnet durch** die Schritte
Hören jeder der Speichereinheiten (1-4) in einer Gruppe (8) der Speichereinheiten auf die Gruppenadresse und
Übertragen von jeder der Speichereinheiten in der Gruppe der Speichereinheiten, abhängig von im Voraus bestimmten Bedingungen, einer Antwortmitteilung, welche die Zugänglichkeit der Beispiele für die spezifische Datei betrifft, an die Nutzereinheit.

2. Verfahren gemäß Anspruch 1, in welchem die Gruppenadresse an die spezifische Datei angehängt ist.

3. Verfahren gemäß Anspruch 1, in welchem die Gruppenadresse an die Gruppe der Speichereinheiten angehängt ist.

4. Verfahren gemäß einem der Ansprüche 1 bis 3, in welchem das Datenkommunikationsnetzwerk ein IP-Netzwerk ist und die Gruppenadresse eine Gruppenrufadresse in dem IP-Netzwerk ist.

5. Verfahren gemäß einem der Ansprüche 1 bis 4, in welchem die im Voraus bestimmten Bedingungen mindestens eine der folgenden umfassen:
dass Beispiele für die spezifische Datei in der Speichereinheit gespeichert sind und dass die Speichereinheit nicht überlastet ist.

6. Verfahren gemäß einem der Ansprüche 1 bis 5, in welchem die Antwortmitteilung über einen im Voraus festgelegten Anschluss übertragen wird.

7. Verfahren gemäß einem der Ansprüche 1 bis 5, in welchem die Antwortmitteilung über einen, auf Basis der Information, die mit der Anfrage übertragen wird, festgelegten Anschluss übertragen wird.

8. Verfahren gemäß einem der Ansprüche 1 bis 5, in welchem die Antwortmitteilung über denselben Anschluss übertragen wird, von dem die Anfrage empfangen wurde.

9. Verfahren gemäß einem der Ansprüche 1 bis 8, in welchem die Antwortmitteilung den Suchpfad der Datei einschließt.

10. Verfahren gemäß einem der Ansprüche 1 bis 9, in welchem die Antwortmitteilung eine Schätzung der Bandbreite, welche die Speichereinheit anbieten kann, einschließt.

11. Verfahren gemäß einem der Ansprüche 1 bis 10, bei welchem die Antwortmitteilung Informationen über die Belastung der Speichereinheit einschließt.

12. System für die Dateiübertragung in einem Datenkommunikationsnetzwerk zum Bestimmen der Zugänglichkeit von Beispielen für eine spezifische Datei in Speichereinheiten (1-5), in welchem eine Nutzereinheit (6) und die Speichereinheiten mit dem Datenkommunikationsnetzwerk verbunden sind, umfassend
Anfragevornchtungen, die in der Nutzereinheit angeordnet sind, für die Übertragung von der Nutzereinheit einer Anfrage, welche die Zugänglichkeit von Beispielen für die spezifische Datei betrifft, an eine Gruppenadresse,
**gekennzeichnet durch**
Empfangsvorrichtungen, die in jeder der Speichereinheiten (1-4) in einer Gruppe (8) der Speichereinheiten für den Empfang einer Anfrage an die Gruppenadresse angeordnet sind, und
Übertragungsvorrichtungen, angeordnet in jeder der Speichereinheiten in der Gruppe der Speichereinheiten für die Übertragung von jeder der Speichereinheiten in der Gruppe der Speichereinheiten, abhängig von im Voraus bestimmten Bedingungen, einer Antwortmitteilung, welche die Zugänglichkeit von Beispielen für die spezifische Datei betrifft, an die Nutzereinheit.

13. System gemäß Anspruch 12, in welchem die Gruppenadresse an die spezifische Datei angehängt ist.

14. System gemäß Anspruch 12, in welchem die Gruppenadresse an die Gruppe der Speichereinheiten angehängt ist.

15. System gemäß einem der Ansprüche 12 bis 14, in welchem das Datenkommunikationsnetzwerk ein IP-Netzwerk ist und die Gruppenadresse eine Gruppenrufadresse in dem IP-Netzwerk ist.

16. System gemäß einem der Ansprüche 12 bis 15, in welchem die im Voraus bestimmten Bedingungen mindestens eine der folgenden umfassen:
dass Beispiele für die spezifische Datei in der Speichereinheit gespeichert sind und dass die Speichereinheit nicht überlastet ist.

17. System gemäß einem der Ansprüche 12 bis 16, in welchem jede der Gruppen der Speichereinheiten einen ftp-Server einschließt und die Nutzereinheit einen ftp-Client einschließt.

18. System gemäß einem der Ansprüche 12 bis 17, in welchem jede der Gruppen der Speichereinheiten einen Web-Server einschließt und die Nutzereinheit einen Web-Client einschließt.

## Revendications

1. Procédure de transmission d'un fichier de données dans un réseau de transmission pour déterminer l'accessibilité des exemples d'un fichier de données spécifique dans des unités de stockage (1-5), comprenant les étapes consistant à :
transmettre depuis une unité utilisateur (6) une requête concernant l'accessibilité d'exemples du fichier de données spécifique à une adresse de groupe,
**caractérisée par** les étapes consistant à ce que
chacune des unités de stockage (1-4) dans un groupe (8) des unités de stockage reçoive ladite adresse de groupe, et
consistant à transmettre depuis chacune des unités de stockage dans ledit groupe des unités de stockage, en fonction de conditions déterminées à l'avance, un message de réponse concernant l'accessibilité d'exemples du fichier de données spécifique à l'unité utilisateur.

2. Procédure selon la revendication 1, dans laquelle l'adresse de groupe est jointe au fichier de données spécifique.

3. Procédure selon la revendication 1, dans laquelle l'adresse de groupe est jointe audit groupe des unités de stockage.

4. Procédure selon l'une quelconque des revendications 1 à 3, dans laquelle le réseau de transmission est un réseau IP et l'adresse de groupe est une adresse multidiffusion dans le réseau IP.

5. Procédure selon l'une quelconque des revendications 1 à 4, dans laquelle lesdites conditions déterminées à l'avance comprennent au moins l'une des conditions suivantes :
les exemples du fichier de données spécifique sont stockés dans l'unité de stockage, et
l'unité de stockage n'est pas surchargée.

6. Procédure selon l'une quelconque des revendications 1 à 5, dans laquelle le message de réponse est transmis via un port déterminé à l'avance.

7. Procédure selon l'une quelconque des revendications 1 à 5, dans laquelle le message de réponse est transmis via un port déterminé, en fonction des informations qui sont transmises avec la requête.

8. Procédure selon l'une quelconque des revendications 1 à 5, dans laquelle le message de réponse est transmis via le même port que celui à partir duquel la requête a été reçue.

9. Procédure selon l'une quelconque des revendications 1 à 8, dans laquelle le message de réponse comprend le chemin de recherche du fichier de données.

10. Procédure selon l'une quelconque des revendications 1 à 9, dans laquelle le message de réponse comprend une estimation de la bande passante que l'unité de stockage peut offrir.

11. Procédure selon l'une quelconque des revendications 1 à 10, dans laquelle le message de réponse comprend des informations sur la charge de l'unité de stockage.

12. Système de transmission d'un fichier de données dans un réseau de transmission destiné à déterminer l'accessibilité d'exemples d'un fichier de données spécifique dans des unités de stockage (1-5), dans lequel une unité utilisateur (6) et les unités de stockage sont connectées audit réseau de transmission, comprenant
des dispositifs de requête agencés dans l'unité utilisateur pour la transmission depuis l'unité utilisateur d'une requête concernant l'accessibilité d'exemples du fichier de données spécifique à une adresse de groupe,
**caractérisé par**
des dispositifs de réception agencés dans chacune des unités de stockage (1-4) dans un groupe (8) des unités de stockage pour la réception d'une requête à ladite adresse de groupe, et
des dispositifs de transmission agencés dans chacune des unités de stockage dans ledit groupe des unités de stockage pour la transmission depuis chacune des unités de stockage dans ledit groupe des unités de stockage, en fonction de conditions déterminées à l'avance, d'un message de réponse concernant l'accessibilité d'exemples du fichier de données spécifique à l'unité utilisateur.

13. Système selon la revendication 12, dans lequel l'adresse de groupe est jointe au fichier de données spécifique.

14. Système selon la revendication 12, dans lequel l'adresse de groupe est jointe audit groupe des unités de stockage.

15. Système selon l'une quelconque des revendications 12 à 14, dans lequel le réseau de transmission est un réseau IP et l'adresse de groupe est une adresse de multidiffusion dans le réseau IP.

16. Système selon l'une quelconque des revendications 12 à 15, dans lequel lesdites conditions déterminées à l'avance comprennent au moins l'une des conditions suivantes :
les exemples du fichier de données spécifique sont stockés dans l'unité de stockage, et
l'unité de stockage n'est pas surchargée.

17. Système selon l'une quelconque des revendications 12 à 16, dans lequel chacune dudit groupe d'unités de stockage comprend un serveur ftp et l'unité utilisateur comprend un client ftp.

18. Système selon l'une quelconque des revendications 12 à 17, dans lequel chacune dudit groupe d'unités de stockage comprend un serveur Web et l'unité utilisateur comprend un client Web.
